# EUROPEAN PATENT SPECIFICATION

(11) **EP 2 781 110 B1**
(45) Date of publication and mention of the grant of the patent: **16.09.2015**
(21) Application number: 12723919.2
(22) Date of filing: 02.05.2012
(51) Int. Cl.: H04W 4/12, H04W 4/14, H04L 12/58

(54) **SYSTEM AND METHOD FOR DISTRIBUTING SMS MESSAGES**
SYSTEM UND VERFAHREN ZUR VERTEILUNG VON SMS-NACHRICHTEN
SYSTÈME ET PROCÉDÉ DE DISTRIBUTION DE MESSAGES SMS

(30) Priority: 18.11.2011 US 201113300280
(43) Date of publication of application: 24.09.2014
(73) Proprietor: Telefonaktiebolaget L M Ericsson (publ), 164 83 Stockholm (SE)
(72) Inventor: ZHU, Zhongwen, Saint-Laurent, Québec H4R 3H7 (CA); GOSSELIN, Nicolas, Blainville, Québec J7C 4Y4 (CA); ANDRADE, Dilip, Montreal, Québec H2X 3V2 (CA)
(74) Representative: Röthinger, Rainer
(86) International application number: PCT/IB2012/052203
(87) International publication number: WO 2013/072780

(56) References cited:
- EP-A1- 1 613 102
- WO-A1-2008/052334
- US-A1- 2008 171 549
- GSM Association: "Rich Communication Suite Release 4 Functional Description Version 1.0", , 14 February 2011 (2011-02-14), XP55034741, Retrieved from the Internet: URL:http://www.gsma.com/rcs/wp-content/upl oads/2012/03/rcsrel4funcdescpv1.pdf [retrieved on 2012-08-06]
- Open Mobile Alliance: "Converged IP Messaging Requirements", , 12 October 2010 (2010-10-12), XP55034625, Retrieved from the Internet: URL:http://www.openmobilealliance.org/Tech nical/release_program/docs/CPM/V1_0-201010 12-C/OMA-RD-CPM-V1_0-20101012-C.pdf [retrieved on 2012-08-03]
- "Digital cellular telecommunications system (Phase 2+); Universal Mobile Telecommunications System (UMTS); LTE; Value-added Services for SMS (VAS4SMS); Interface and signalling flow (3GPP TS 23.142 version 9.0.1 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V9.0.1, 1 January 2010 (2010-01-01), XP014045230,

## Description

### TECHNICAL FIELD

The present disclosure generally relates to the use of short-message service (SMS) messages as a delivery channel for a multi-platform instant messaging service.

### BACKGROUND

Short Message Service (SMS) functionality is an existing part of a number of different mobile telephony standards. These messages are typically restricted to 160 character messages, and are transmitted through control channels in many mobile telephony networks. Users are often charged by their carrier for sending or receiving messages, although in many networks incoming messages are freely delivered, and many carriers also offer rate plans that provide for either unlimited messaging or a very high volume of messages in a fixed fee package.

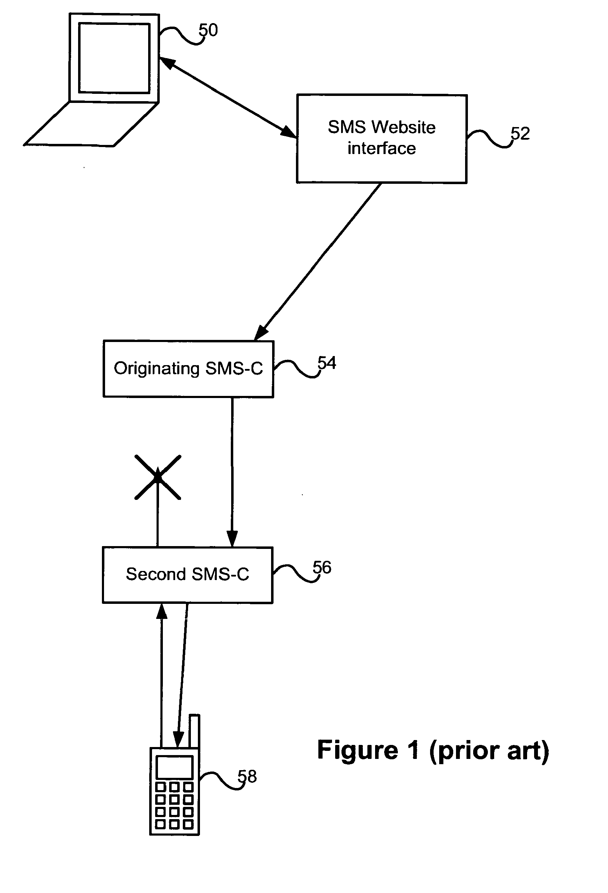

To provide SMS sending capabilities to users who do not want to use a mobile phone to send an SMS, some carriers provide an SMS sending service through a web-based interface. An example of such a service is shown in Figure 1. Using a computer 50, a user interacts with a website 52 and provides both a destination phone number and a message to be sent. The message and phone number are relayed to an originating SMS-Centre (SMS-C) 54. This message may be provided directly or through an intermediate node and can be sent using one of a plurality of different protocols including hypertext transfer protocol (HTTP), the simple mail transfer protocol (SMTP) and other conventional protocols that will be understood by those skilled in the art. The SMS-C 54 sends the SMS message to a terminating SMS-C 56 which is the SMS-C associated with the destination handset 58. The SMS message is forwarded to handset 58, where it can be read by the recipient. In such systems, the sender address provided in the SMS message is a short code (a contact number typically 5 digits long) associated with the web-based portal, or associated with the carrier in general. A reply to the SMS sent to the sender address in this example will be considered undeliverable, and will be dropped by the terminating SMS-C 56.

Instant messaging services have proven to be very popular with a number of different market segments. Conventionally, these services have been single platform services that have relied on a data-packet based delivery channel. Among these popular services are Microsoft™'s MSN Messenger, and Yahoo!™'s Yahoo! Messenger. These platforms allow users to login to a server that tracks presence information about each user. By accessing the presence information associated with a list of contacts, users are able to find contacts that are online, and engage them in a chat session. One problem that users experience with these services is that they typically rely on a client designed for the computing platform of choice, or is accessed through a webpage. When a user starts a chat session using a desktop computer, and then moves to a different platform such as a mobile device, these services often treat the changeover as the start of a new chat session.

Some of these services have recognized the need to reach users that are not online, and thus allow users to send messages, through the chat server, to a phone number associated with a chat contact. In most of these systems, the setup is similar to the one shown in Figure 1, but with the website 52 replaced with the chat server. As a result, it is possible to send a message to a user's mobile phone, but it is not possible for the recipient to either easily identify the sender of the message based on the addressing of the message or to reply to the message.

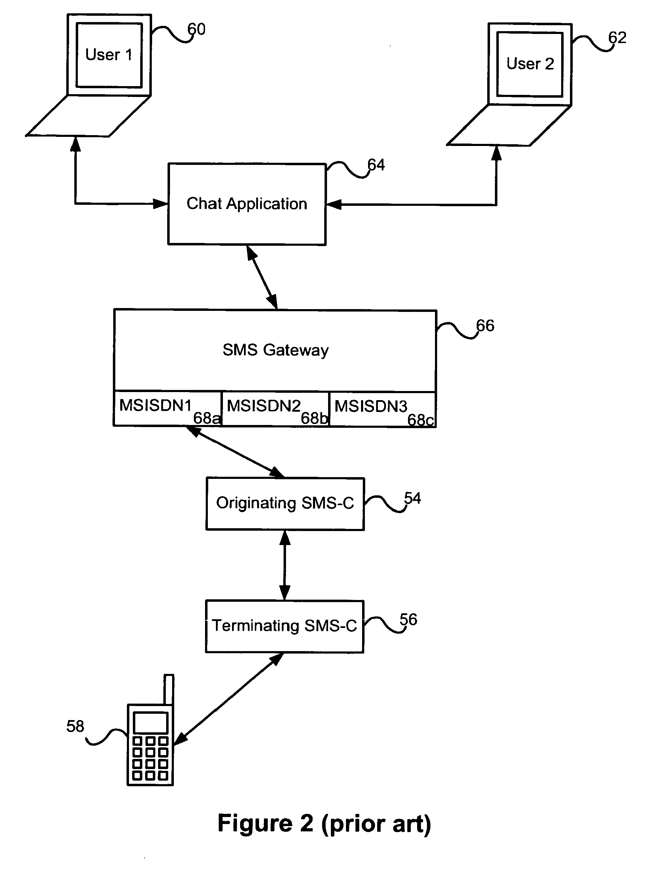

To address this problem, a solution has been offered as shown in Figure 2. Computer 60 and computer 62 connect to each other through an application 64 that enables a chat service. Messages between the users are routed in a conventional fashion. If user 2 terminates the connection between computer 62 and chat application 64, user 1 at computer 60 sees user 2 log off the system. If user 1 has a profile for user 2 that includes a mobile phone number, a message can still be sent to chat application 64 from computer 60. The chat application 64 can determine based on stored presence information that user 2 is not available, and can then forward the received message to user 2 through an SMS message. The message is forwarded to SMS gateway 66. SMS gateway 66 has a plurality of Mobile Subscriber Integrated Services Digital Network (MSISDN) numbers associated with it, shown as MSISDN1 68a, MSISDN2 68b and MSISDN3 68c. The SMS gateway 66 creates a pair-wise unique mapping between the MSISDN associated with user 2 and the gateway MSISDN selected to send user 1's message (in this example MSISDN1 68a). This SMS message is then sent through originating SMS-C 54, to terminating SMS-C 56 and then to mobile device 58. User 2 will receive the message from an MSISDN that can be replied to (MSISDN1 68a). A reply is received by terminating SMS-C 56 and forwarded to the originating SMS-C 54 which delivers the message to SMS gateway 66 through a device associated with MSISDN1 68a. SMS gateway 66 can then determine based on the MSISDN the message was received through, and the MSISDN that the message was sent from, which user to deliver the message to. The message is then sent to user 1 on computer 60 through chat application 64.

This solution enables users to reach each other after a chat session has ended, but causes a series of different problems. Although the messages received on mobile device 58 can be replied to, based on the length of time that the pair-wise unique mapping is maintained, MSISDN1 68a cannot be relied upon as a number that the mobile device 58 can permanently associate with user 1. If the length of time is very large, it would require the entity offering the chat application to maintain a large pool of MSISDN's which is very expensive, and then still requires that user 2 assign a phone number to user 1 that can only be used during a chat session. As such, it is impractical for user 2 to be able to use the sending MSISDN of an incoming message to identify the sender of the address. Furthermore, there is no context associated with the message, as there is no indication of the previous messages that were exchanged via the chat session.

Other solutions to this problem have been to create chat clients for mobile devices that rely on a packet data delivery system. This is feasible on third generation (3G) networks and their successor networks (such as IEEE 802.16, commonly known as Worldwide Interoperability for Microwave Access (WiMax) and Long Term Evolution (LTE)), but still requires that users subscribe to the service and that they maintain themselves as online using these services. This generates more data traffic, which is a double edged sword for carriers. Although a carrier is able to charge for the use of data services, building a sufficiently robust data network is difficult for many carriers in high demand environments. Furthermore, for many users this requires the addition of a data service which comes with an associated cost.

Some services, such as voice-over-IP, allow a user to make use of a bridge between packet switched data services, such as the Internet, and circuit switched voice networks such as the Public Switched Telephone Network (PSTN). Some of these services allow a user to make outbound calls that are reported to the recipient as having originated at the MSISDN of another device. This allows a user to initiate a telephone call from a computer, and have the recipient see the caller ID data associated with the user's mobile phone. This is done through the control of the data provided in the Signaling System Seven (SS7) signaling channels. Skype™ provides such a service. Because these services recognize the need for their users to be able to have many different communication routes, many offer the ability for the user to send an SMS message. The delivery mechanism for these services is similar to that illustrated in Figure 1, and the SMS messages are delivered with a sender address being a short code, which means that the recipient cannot reply to the received message by SMS.

Chat services in the existing art do not typically allow users to easily switch between platforms. To offer users the ability to easily recognize who is sending a message, they require the use of data services which may not be available to all users.

SMS messages provide a number of advantages to carriers. Whereas the delivery of data packets involves the use of an otherwise scarce resource (bandwidth assigned to data), SMS messages are often thought of as traveling for free. SMS messages are sent through dedicated control channels, and make use of otherwise unused bandwidth. The fact that they can be charged for only increases the interest that carriers have in their use. SMS messages have proven so popular that extensions are offered that allow devices to split a message that exceeds 160 characters into more than one message (so-called long SMS message), and allow the receiving devices to recognize these multipart messages as single messages for display. Additionally, Multimedia Message Service (MMS) messages have also been offered that allow SMS messages to be used as a delivery mechanism for rich content such as photos and videos.

Moreover, the document EP 1 613 102 A1 describes a method and a telecommunication system allowing controlled delivery of short messages. Instructions for SMS message handling are applied containing, for example, redirecting a message addressed to a first MSISDN to a Mobile Station with a second MSISDN and distributing messages to real and virtual Mobile Stations, the virtual Mobile Station allowing a subscriber to interact with the messaging system via a P- terminal.

Further background art is described in "Rich Communication Suite Release 4 Functional Description Version 1.0" (2011-02-14, XP55034741), Open Mobile Alliance "Converged IP Messaging Requirements" (2010-10-12, XP55034625), "Digital cellular telecommunications system (Phase 2+); Universal Mobile Telecommunications System (UMTS); LTE; Value-added Services for SMS (VAS4SMS); Interface and signaling flow (3GPP TS 23.142 version 9.0.1 Release 9)" (ETSI, 650, 2010-01-01, XP014045230) and the documents WO 2008/052334 A1 and US 2008/171549 A1.

It should be readily appreciated that it would be advantageous to provide a solution that allows carriers to leverage their investment in the SMS infrastructure to provide chat services to users on a plurality of different platforms.

### SUMMARY

It is an object of the present invention to obviate or mitigate at least one disadvantage of the prior art. The object is solved by methods for distributing messages by a network messaging center according to independent claims 1 and 10 and a Short Message Service Center according to independent claim 14.

In a first aspect of the present invention there is provided a method for distributing messages by a network messaging center. The method comprises the steps of receiving a message from a first entity, associated with a first Mobile Subscriber Integrated Services Digital Network Number (MSISDN), addressed to a second MSISDN; transmitting the received message to the second MSISDN; and forwarding a copy of the received message to a second entity associated with the first MSISDN. The first entity can be a device to which the first MSISDN has been assigned, and the second entity can be an active address book associated with the first MSISDN. Alternatively, the first entity can be an active address book associated with the first MSISDN, and the second entity can be a device to which the first MSISDN has been assigned. The copy of The copy of the received message can be modified to indicate the first MSISDN as the sender. The step of forwarding the copy of the received message can be performed in response to determining that a suspend delivery condition is not active. The copy of the received message can be buffered prior to forwarding the copy to the second entity. The step of buffering can be performed in response to determining that a suspend delivery condition is active. Determining a suspend delivery condition to be active can be in accordance with activity associated with at least one of the first and second entities. A suspend delivery condition can apply to all messages addressed to the first MSISDN. A suspend delivery condition can apply to all messages associated with the second MSISDN.

In a second aspect of the present invention there is provided a method for distributing messages by a network messaging center. The method comprises the steps of receiving a message from a first Mobile Subscriber Integrated Services Digital Network Number (MSISDN) addressed to a second MSISDN; forwarding the received message to an entity associated with the second MSISDN; and withholding transmission of the received message to a device to which the second MSISDN has been assigned, in response to determining a suspend delivery condition associated with the second MSISDN is active. The entity associated with the second MSISDN can an active address book. The received message can be buffered for later delivery. The received message can be transmitted to the device to which the second MSISDN has been assigned in response to determining the suspend delivery condition is not active. The step of transmitting can include retrieving the withheld message from a storage, such as a Network Storage Solution.

In another aspect of the present invention there is provided a Short Message Service Center (SMS-C) node. An SMS-C interface is for sending messages to and receiving messages from a second SMS-C. A mobile device interface is for sending messages to and receiving messages from a mobile device to which a Mobile Subscriber Integrated Services Digital Network Number (MSISDN) has been assigned. An active address book interface is for sending messages to and receiving messages from an entity associated with the MSISDN. A processor is for receiving a message over one of the SMS-C interface, the mobile device interface, and the active address book interface and for forwarding the received message to the other two interfaces. The SMS-C can further comprise a buffer for queuing messages forwarded to the mobile device interface. The processor can include a delivery suspension engine for determining a suspend delivery condition associated with the MSISDN is active, and for forwarding the received message to a buffer in response to the determination. The processor can include a modification engine for modifying the received message prior to forwarding the message to the mobile device interface.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Figure 1 is a block diagram illustrating a system of the prior art;
Figure 2 is a block diagram illustrating a system of the prior art;
Figure 3 is a block diagram illustrating the interaction of nodes exchanging messages;
Figure 4 is a block diagram illustrating the display of messages sent by entities associated with the same MSISDN;
Figure 5 is a block diagram illustrating interaction of nodes in an embodiment of the present invention;
Figure 6 is a call flow diagram illustrating an embodiment of the present invention;
Figure 7 is a block diagram illustrating interaction of nodes in an embodiment of the present invention;
Figure 8 is a block diagram illustrating interaction of nodes in an embodiment of the present invention;
Figure 9 is a call flow diagram illustrating an embodiment of the present invention;
Figure 10 is a block diagram illustrating interaction of nodes in an embodiment of the present invention;
Figure 11 is a flow chart illustrating a method for distributing messages by a messaging center;
Figure 12 is a flow chart illustrating a method for distributing messages by a messaging center; and
Figure 13 is a block diagram illustrating an example SMS-C node.

### DETAILED DESCRIPTION

The present invention is directed to a system and method for distributing SMS messages during a chat session.

In the following discussion, methods and systems for providing chat type services will be discussed in the context of an SMS-based transport layer. Although the following discussion is based around users making use of a web-based chat client, any user client can be used. Clients can be specifically designed to work with a variety of computer operating systems, including mobile device operating systems. Although the discussion below focuses on a single non-mobile device interface, this is done for the sake of simplicity and it should be understood by those skilled in the art that other interfaces to the system described below can be implemented without departing from the scope of the present invention.

SMS messaging is a reliable and convenient transport mechanism for messages. The SMS delivery infrastructure can be leveraged to provide message transport layer for an instant messaging system. A non-mobile phone interface can provide a mechanism for both sending and receiving messages associated with an MSISDN that is assigned to a handset associated with a user. When messages are sent, they are preferably addressed from the MSISDN associated with the sending user. Thus, a recipient will receive the messages and they will appear as being sent from the sender's phone number. This allows the recipient to reply to the message and have the messages routed to the original sender's phone. In a further refinement, the SMS message can also be relayed back to the non-mobile phone interface. Two users using the non-phone interface will be able to have a live chat session without needing to interact through their mobile phones. If one of the parties leaves the computer, the chat can continue as the messages are directed to the MSISDN associated with each party, so the SMS messages will still be delivered to the phone. Replies from the mobile phone will still be delivered to the other party. The use of such a non-mobile phone interface for sending and receiving SMS messages can be completely transparent to the other party.

Some carriers offer a service referred to as an active address book. This service can be accessed over a data network such as the Internet and provides a user with the ability to synchronize contact information with a server provided by the carrier. Through these services, the user is able to make use of a series of different services. The interface to the active address book is often a web-based interface, and it can be used to provide the user with the ability to send SMS messages to contacts in the active address book directly from the web-based interface. The ability to use a full keyboard, and have access to a secure address book to select the people to whom to send the message are often seen as benefits of this service. As part of the use of an active address book, users are required to login to a secure server. This is sufficient proof to the carrier that the user of a service is associated with the subscriber associated with an account. The subscriber's account is also associated with an MSISDN, the MSISDN that is associated with the user's mobile device or phone. By allowing the active address book to both send messages on behalf on an MSISDN, and receive messages addressed to the MSISDN, an Instant Message-like chat service is created.

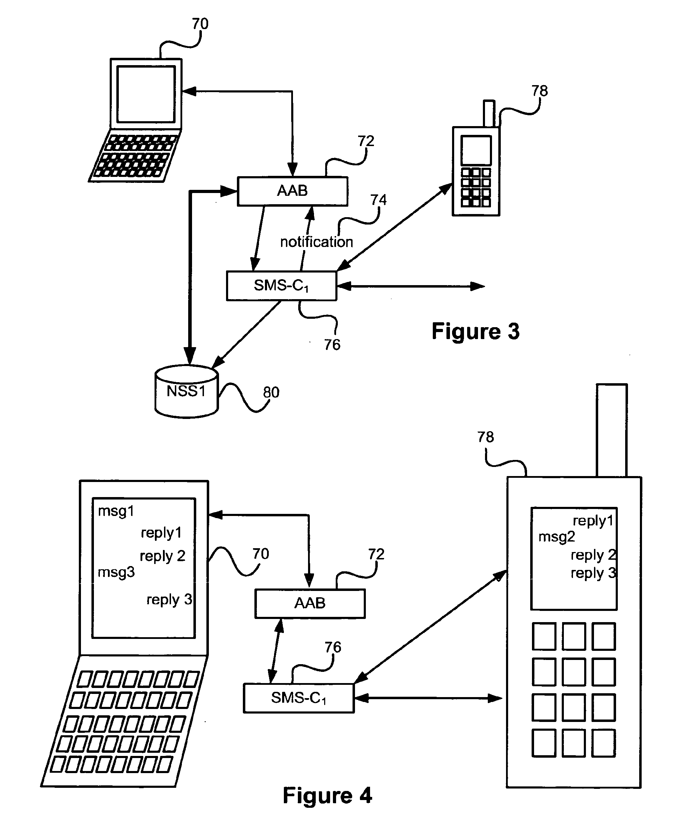

Referring now to Figure 3, an SMS-C 76 receives SMS messages addressed to the MSISDN of the mobile device, or handset 78. These messages are then relayed to the mobile device 78, and stored in the Network Storage Solution (NSS) 80. A notification 74 can be issued by the SMS-C 76 that instructs the Active Address Book (AAB) 72 that a message has been received. The received message can either be included in the notification 74 or it can be identified in the notification 74, which then allows the AAB 72 to retrieve the message from the NSS 80. By retrieving messages and displaying them on a computer 70, the AAB 72 allows the user to have conversations with other parties without using his mobile device 78. If the other party is set up in a similar way, then two computer terminals are transmitting instant messages to each other using SMS as the delivery mechanism. Furthermore, if the user walks away from the computer 70, he can continue to carry on the conversation using a mobile device such as handset 78 without the other party seeing any difference.

Figure 4 illustrates a possible undesirable presentation of the embodiment described in Figure 3. The mobile device 78 and the computer 70 are both associated with the same user, and thus, the MSISDN associated with the user. The user's session allows the AAB 72 to send messages on behalf of, and display messages addressed to, the MSISDN of the mobile device 78. When the user sends a message (msg1) from the computer 70 via the AAB 72, it is relayed to a recipient. If the recipient replies (reply 1), the message is delivered to both the AAB 72, which displays the message on the computer 70, and the handset 78. If the user has left the computer 70, he can send a second message (msg2) from the handset 78. A reply (reply2) to msg2 is delivered to both entities - AAB 72 and handset 78. A third message (msg3) is sent from the AAB 72, and the corresponding reply (reply3) is delivered to both devices.

Although the user is able to continue the chat session from either entity, the problem arises that messages sent by the user from one of the two entities are only displayed on the entity that sent the message. This means that the user will have only a fragment of his own side of the conversation although the other part of the conversation will be complete. This impairs the ability of the user to understand the full context of the communication at a later point in time.

Another potential issue with such a system is that a user who is engaged in a chat session will often be generating a large number of messages on the computer 70. When a reply comes in, the user receives the reply on the computer 70 through AAB 72 but is also provided with a second notification on the phone 78. Typically, handset 78 will generate a notification for the received message. This can be distracting to the user who may not want to be alerted of receipt of a message that he may already be composing a reply to.

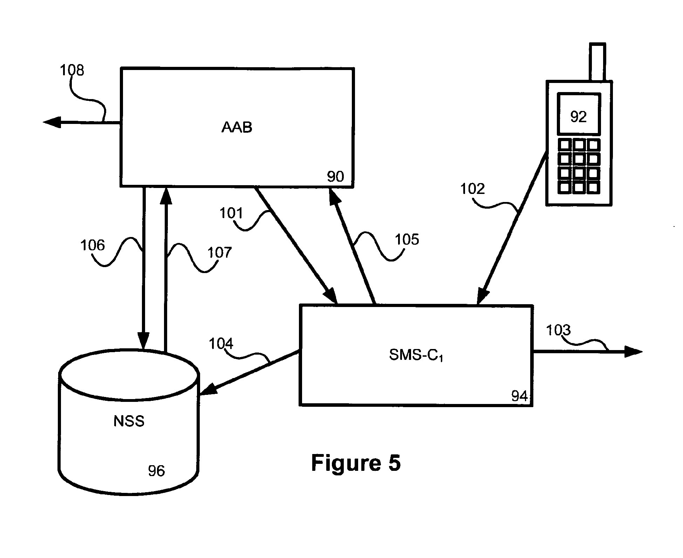

Figure 5 illustrates an embodiment of the present invention which provides an AAB 90 with a complete history of all messages sent and received in a conversation. The AAB 90 subscribes to notifications from the SMS-C 94 as shown by subscribe message 101. This can be done using any of a number of techniques including making a long poll request for a notification of any message sent from the handset 92 or through a request for a push notification. When the handset 92 sends a message 102, the SMS-C 94 forwards the message for delivery to the recipient in data flow 103, stores a copy of the message in the NSS 96 in data flow 104, and sends reply 105 in response to the pending long poll from the AAB 90. Upon being informed that the handset 92 has sent a message, AAB 90 sends a request 106 to the NSS 96, and receives a reply 107 which contains the copy of the original message of 102. The retrieved message is then displayed 108 by the AAB 90 to the user. Optionally, the SMS-C 90 could simply respond with a copy of the message 102 in notification 105 which would obviate the need for messages 106 and 107.

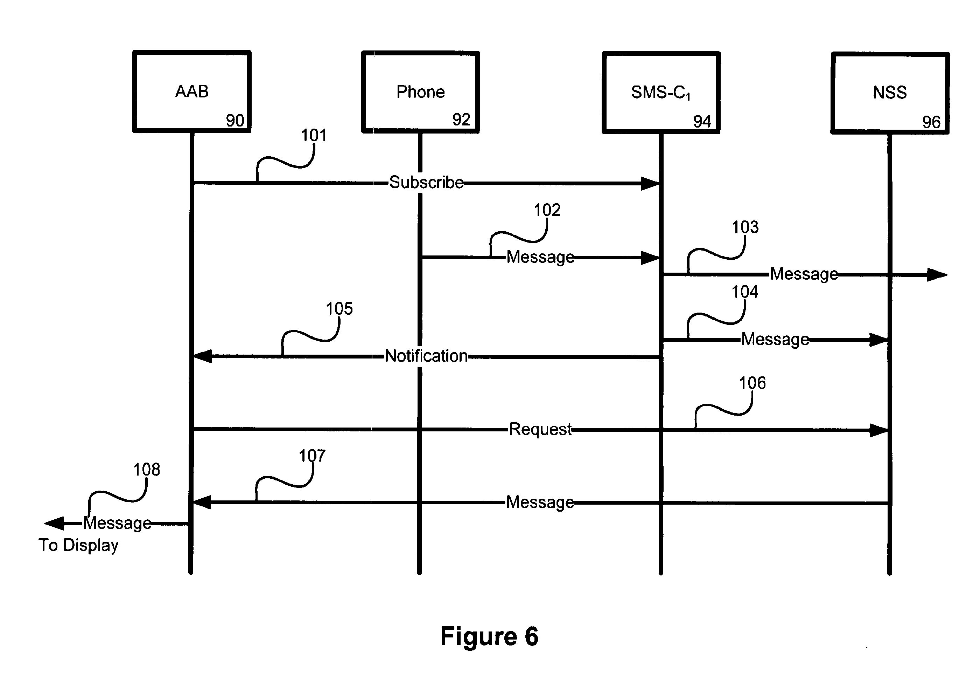

Figure 6 is a call flow diagram illustrating the embodiment described in Figure 5. The AAB 90 subscribes 101 to notifications from the SMS-C 94. Handset 92 sends a message 102, the SMS-C 94 forwards 103 the message for delivery to the recipient, stores 104 a copy of the message in the NSS 96, and sends notification 105 in response to the subscription for notifications from the AAB 90. In response to the notification 105, AAB 90 sends a request 106 to the NSS 96, and receives a reply 107 which contains the copy of the message of 102. The message is then sent 108 to a display by the AAB 90 for viewing by the user.

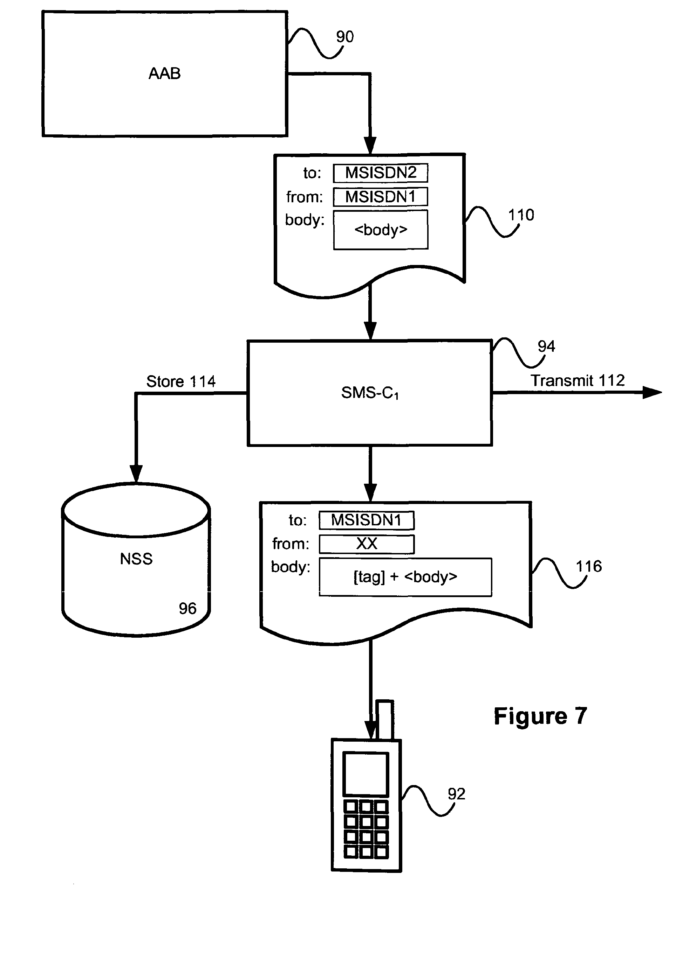

Figure 7 illustrates an embodiment of the present invention which provides a mobile device 92 with a complete history of all messages sent and received in a conversation. When a message 110 is sent from the AAB 90, it is addressed to MSISDN2, and addressed from MSISDN1. Upon receiving message 110 from AAB 90, the SMS-C 94 transmits the message 112 towards MSISDN2 and stores a copy 114 in the NSS 96. The SMS-C 94 can then re-address the message 116, for delivery to MSISDN1 and display on handset 92.

The "from" address can be either left the same so that the user sees that the message 116 came from him, in which case it will be a message from MSISDN1 to MSISDN1, or it can be modified so that another number is identified as the sender. In one option, the SMS-C 94 modifies the "from" address so that it is replaced with an address identified with the chat service. The body of the message can also be modified to include a tag. This tag could be used by an intelligent SMS client on a phone to associate the message with the identified recipient. In one embodiment, the body could be modified to be "[chat to MSISDN2] + [body]". In another option, the "from" address could be modified to appear to be from MSISDN2, with a modification to the body indicating that the message 116 was actually originated from MSISDN1. This would allow the SMS client on the phone to automatically group the message with other between the two users. The body could also be modified (e.g. "[from you] + [body]"). As such, messages composed on the AAB 90 can be modified at the SMS-C 94 to identify the chat session by modifying the "from" address, the body of the message, or both of those fields.

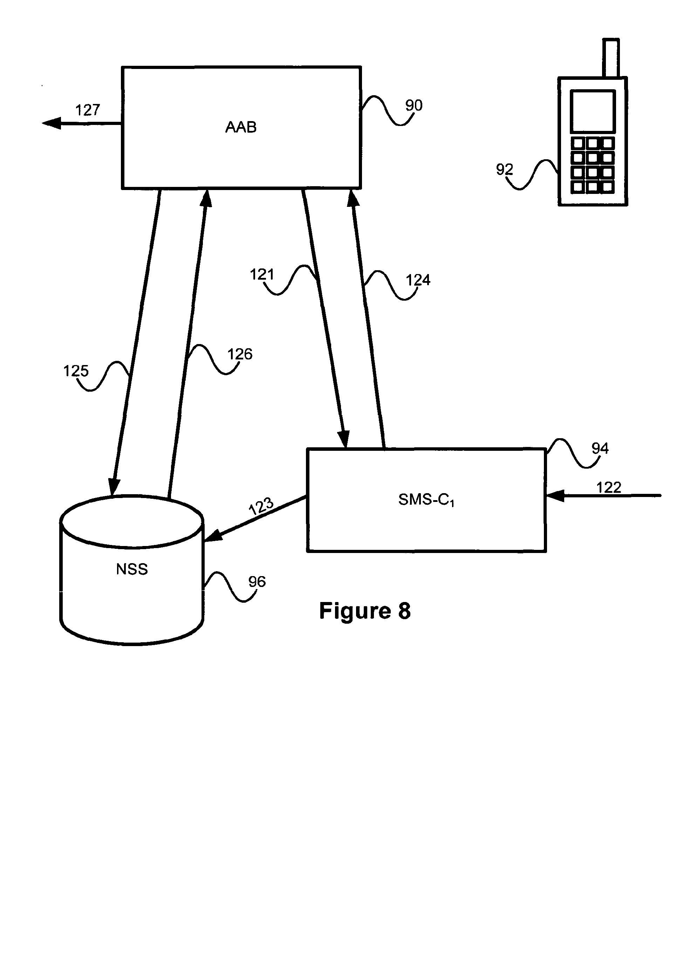

Figure 8 illustrates an embodiment of the present invention which provides a method that allows a user to avoid receiving duplicate notifications of incoming messages. As noted above, one problem that can arise is that the user is logged in to the AAB 90 and receives messages both through the AAB 90 and the mobile device 92, along with the resulting notifications on the mobile device 92. In message 121, the AAB 90 informs the SMS-C 94 that the user is active on the AAB 90, and requests that message delivery to the handset 92 be suspended. In step 122 an SMS addressed to MSISDN1 is received. The message is then stored 123 in the NSS 96. Notification 124 of the received message is sent to the AAB 90, which requests the message in 125 and receives it in 126 from the NSS 96. The received message is subsequently displayed 127 to the user. The SMS-C 94 does not forward received SMS message 122 to the device 92 to which MSISDN1 has been assigned while the request for message delivery suspension is active.

This allows the user to not receive dual notifications of the received message 122 on both the computer and the handset 92. Determination of user presence can be done by determining if the user is logged in. If the user is not logged in, such a message 121 would not be provided to the SMS-C 94. If the user is logged in, but idle, the request for suspension message 121 can be cancelled.

It should be noted that it is uncommon for the suspension of message delivery to be utilized as a feature providing a service to a user. Typically, delivery suspension to a device to which an MSISDN has been assigned only occurs as a result of network issues, service interruption or the device being unavailable (e.g. device is powered off).

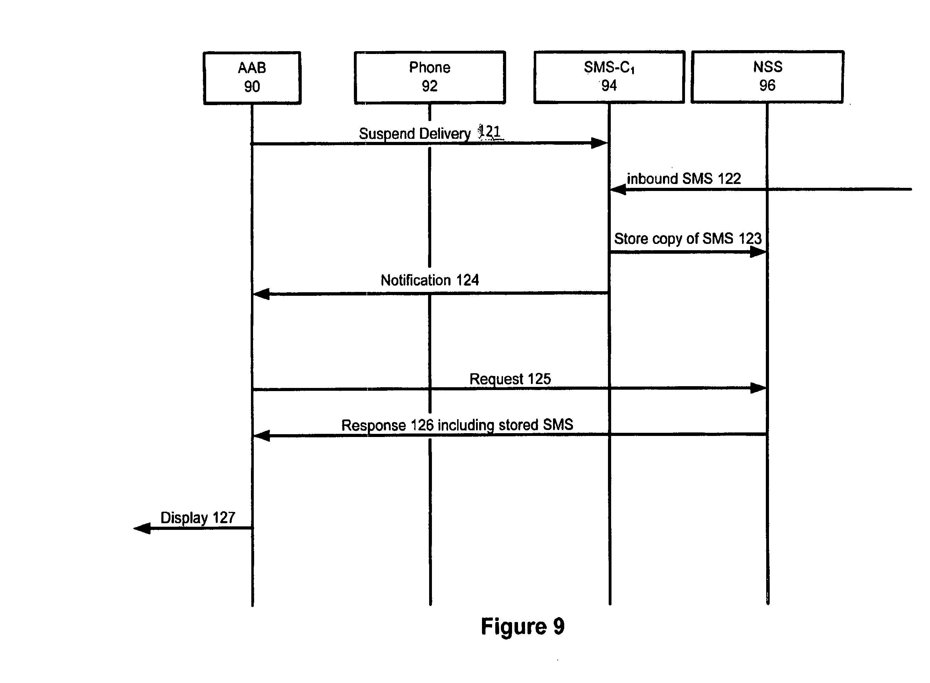

Figure 9 is a call flow diagram illustrating the embodiment described in Figure 8. The AAB 90 sends a request 121 to suspend delivery of messages to the handset 92 to the SMS-C 94. SMS message 122 addressed to MSISDN1 is received by the SMS-C 94. A copy of the received SMS 122 is forwarded in step 123 to the NSS 96 for storage. Notification 124 of the receipt of SMS 122 is sent to the AAB 90, and a copy of the stored SMS is requested in 125 from the NSS 96, and retrieved in 126. Subsequently, it is displayed 127 to the user.

The SMS-C 94 determines a suspend delivery condition for the MSISDN associated with the user (i.e. MSISDN1), and forwards any received message, such as SMS 122, to the AAB 90 associated with MSISDN1 without transmitting the received message to the device 92 to which MSISDN1 has been assigned. During a suspend delivery condition, the SMS-C 94 can optionally delay or buffer any received messages. These messages can be queued for delivery to the device 92 upon determining that the suspend delivery condition is no longer active.

At some point, it may be determined that the user is no longer using the AAB 90. This may be the result of the user explicitly logging out, or of a message being delivered to the AAB 90, and the AAB 90 determining that the user has not read the message. It may also be the result of the AAB 90 determining that no activities have been performed at the computer. Another option is that when the user makes use of the phone 92 to send a message, the SMS-C 94 can determine that the handset is now an active platform. Alternatively, if a message is sent from the handset 92 and a copy is delivered to the AAB 90, it can serve as a trigger to the AAB 90 to release the delivery suspension condition.

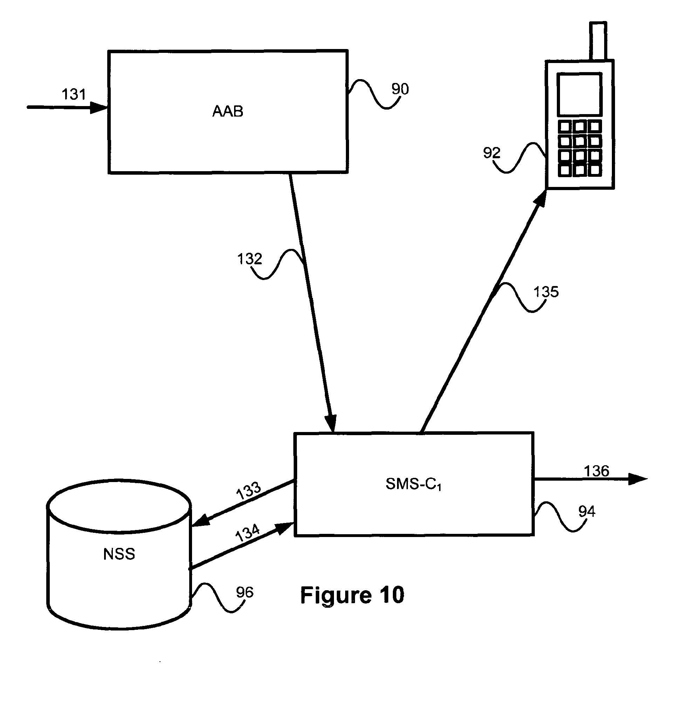

Referring now to Figure 10, the AAB 90 receives a client release 131, and notifies 132 the SMS-C 94. The SMS-C 94 then requests 133 and retrieves 134 all messages that were not delivered to the handset 92 during the suspend delivery condition from the NSS 96. The SMS-C 94 then delivers 135 the retrieved messages to the handset 92. Messages delivered to the handset 92 in data flow 135 can be either messages addressed to MSISDN1, or they can be messages sent by the AAB on behalf of MSISDN1, or both.

Optionally, the client release notification 132 can trigger the SMS-C 94 to transmit a message 136 to a party in an active chat session as a notification that the user associated with MSISDN1 has now gone mobile. This will allow the other party to be aware that messages may be shorter, and may not be as frequent. This type of presence information can be transmitted as an SMS message 136. An AAB or an enhanced SMS client on a handset could receive this message 136 and use it to provide a status for the user who sent it.

In an alternate embodiment, instead of delivering each of the queued messages separately in step 135, a digest of the messages can be sent to the handset 92. In one embodiment, the digest can be an MMS message that provides a single document showing the conversation back and forth. The MMS message can contain a tag that would allow an SMS client to identify the digest as part of a conversation, parse the message to determine the two parties, and render the message as plaintext messages. Optionally, these messages can be inserted into a display format along with any other messages associated with MSISDN1 and MSISDN2.

In another alternate embodiment, the digest can be sent by flooding to and from messages to the handset 92 as SMS messages. The messages to MSISDN1 will be time-stamped, so a client would be able to put them into the correct order. Messages from MSISDN1 could be sent with modified addressing or bodies allowing identification by a smart client, or they could be sent with a modified body that allows the user to see who the messages were sent to (e.g. "[sent to MISDN2] + [body]"). Where needed, multipart messages can be sent to accommodate longer messages.

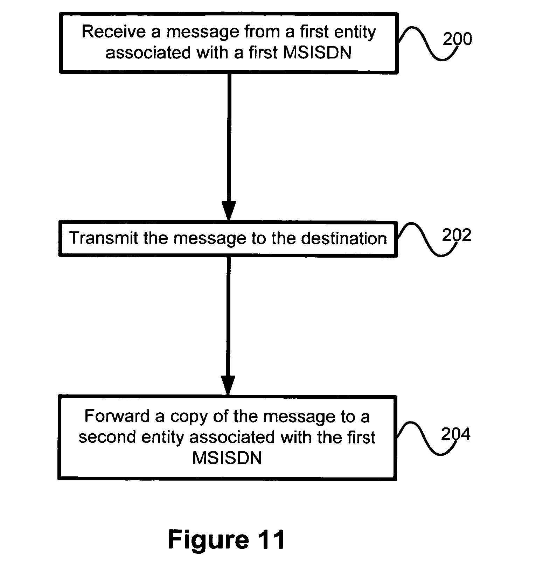

Figure 11 is a flow chart illustrating a method for distributing messages by a messaging center according to an embodiment of the present invention. In step 200, a message is received from a first entity associated with a first MSISDN. The received message is addressed to a destination, such as a second MSISDN. The messaging center transmits the received message to the destination in 202. A copy of the received message is forwarded to a second entity associated with the first MSISDN in step 204. The first entity can be a device to which the first MSISDN has been assigned, and the second entity can be an active address book associated with the first MSISDN. Alternatively, the first entity can be an active address book associated with the first MSISDN, and the second entity can be a device to which the first MSISDN has been assigned. Optionally, the messaging center can modify the copy of the received message to indicate the first MSISDN as the sender prior to the step of forwarding 204 the copy to the second entity associated with the first MSISDN.

Those skilled in the art will appreciate that an entity can be any device which is assigned an MSISDN such as a phone, a mobile device, a tablet, a smart phone, etc. An entity can also be any service authorized to send and/or receive messages on behalf of a user associated with an MSISDN. Examples of such services are active address books, instant messaging applications, chat clients, etc.

In an alternative embodiment, the messaging center can determine a suspend delivery condition associated with the first MSISDN is active and the copy of the received message can be buffered prior to the step of forwarding 204. Forwarding the copy of the received message 204 can be performed in response to determining that the suspend delivery condition is no longer active.

Optionally, the suspend delivery condition can be determined to be active in accordance with an activity associated with the first or second entities. Examples of such activities include the use of the AAB to send or read a message, the user receiving but not reading a message on the handset while active on the AAB, other active uses of the AAB, and other non-messaging activities on the handset while logged into the AAB. The suspend delivery condition can apply to all messages addressed to the first MSISDN, or alternatively, all messages associated with the second MSISDN.

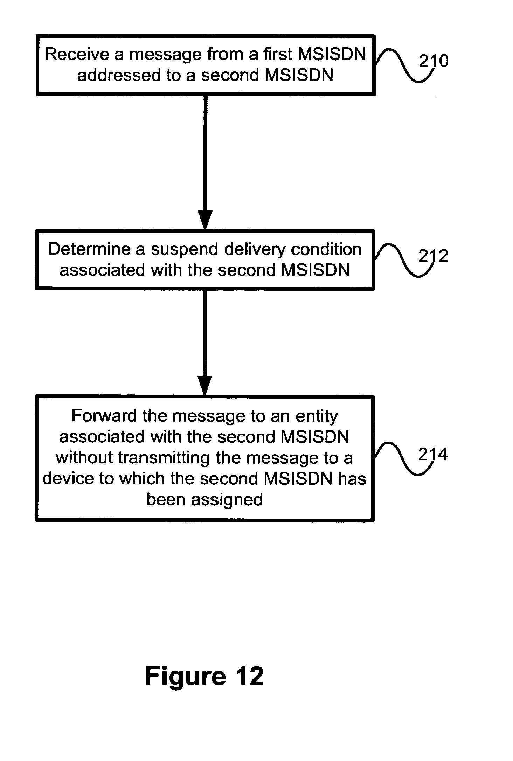

Figure 12 is a flow chart illustrating a method for distributing messages by a messaging center according to another embodiment of the present invention. In step 210, a message is received from a first MSISDN addressed to a second MSISDN. The message center determines a suspend delivery condition associated with the second MSISDN in 212 is active. The suspend delivery condition identified in step 212 is typically active as a result of a request to suspend delivery received from a logical entity, such as an active address book, associated with the second MSISDN. Optionally, the request can include a notification that a user associated with the second MSISDN is active on the active address book. In response to determining that there is an active suspend delivery condition, the received message is forwarded to an entity associated with the second MSISDN without transmitting the message to the device to which the second MSISDN has been assigned in step 214. Transmission of the received message is withheld from the device to which the second MSISDN has been assigned. Any messages received while a suspend delivery condition is active can be buffered or queued for later delivery to the device to which the second MSISDN has been assigned upon determination that the suspend delivery condition is no longer active. Optionally, the message center can receive a notification that the suspend delivery condition should be released. Optionally, the withheld message can be retrieved from storage prior to transmission.

Although the above discussion has focused on determining that a delivery suspension is in place, and then buffering any received messages for later delivery, in other embodiments, the received messages can simply be discarded instead of queued for later delivery.

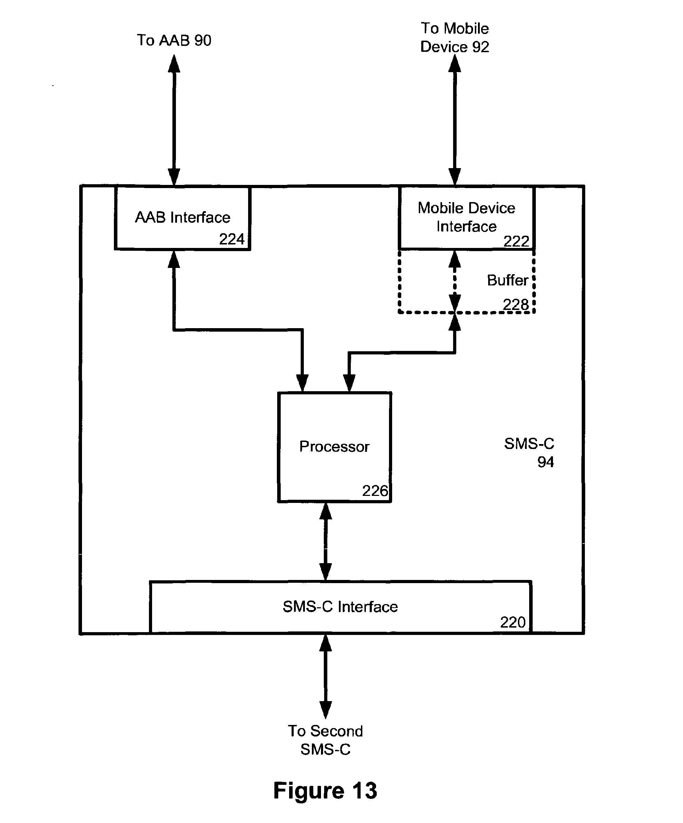

Figure 13 is a block diagram illustrating an example SMS-C node 94 that can implement any of the various embodiments described herein. SMS-C 94 includes an SMS-C interface 220 for sending and receiving messages with a second SMS-C (not shown) in the network; a mobile device interface 226 for sending and receiving messages with a mobile device, such as handset 92, to which an MSISDN has been assigned; and an AAB interface 224 for sending and receiving messages with an entity, such as AAB 90, associated with the MSISDN. Processor 226 receives a message over one of the three interfaces (the SMS-C interface 220, the mobile device interface 222, or the AAB interface 224) and forwards the received message to the other two interfaces for delivery. For example, if a message is received over the SMS-C interface 220, the processor 226 forwards the received message to the mobile device interface 222 and the AAB interface 224.

Optionally, the SMS-C 94 can include a buffer 228 for queuing messages forwarded from the processor 226 to the mobile device interface 222. The buffer 228 can store messages prior to forwarding them over the mobile device interface 222. Optionally, the processor 226 can include a delivery suspension engine for determining a suspend delivery condition associated with the MSISDN. The delivery suspension engine can forward a received message to the buffer 228 in response to determining a suspend delivery condition. Optionally, the processor 226 can also include a modification engine for modifying a received message to indicate the MSISDN as the sender prior to forwarding the message. Other interfaces can be buffered as well, as will be understood by those skilled in the art.

Those skilled in the art will appreciate that the node shown in Figure 13 can make use of a network interface to interact with different nodes. In some cases a single network interface can be re-used for different logical interfaces. The engines employed in this node can be provided in dedicated hardware, as firmware or software executed on general purpose hardware or any mix of the three. Single or multiple processors can be used to instantiate the required instances of the engines illustrated in Figure 13 without departing from the scope of the present invention.

As indicated above, the SMS-C can set a suspend delivery condition to be active, which will prevent delivery of messages to the mobile device. Conversely, the SMS-C can also set the suspend delivery condition to not be active, thus allowing delivery of received messages. One skilled in the art will appreciate that if messages have been buffered, upon determining that the suspend delivery condition has been inactivated, the buffered message will then be delivered to the handset.

The suspend delivery condition can be associated only with the MSISDN of the handset, in which case delivery of all messages addressed to the MSISDN will be withheld. Conversely, the suspend delivery condition could be applied to the MSISDN of the second party, in which case only messages in a particular conversation stream would be withheld, allowing the on-handset notification to occur if a third party sends a message. Those skilled in the art will appreciate that other conditions can be set without departing from the intended scope of protection.

When determining if a suspend delivery condition should be applied to messages associated with an MSISDN, the SMS-C can base the activation of the suspend delivery condition on the use of the AAB to send a message, the reading of a received message on the AAB, the user receiving but not reading a message on the handset while active on the AAB, other active uses of the AAB, and other non-messaging activities on the handset while logged into the AAB (e.g. while logged in to the AAB, and while the handset is in active use for a voice call). These conditions can be selectable and customizable by the user.

In determining that a suspend delivery condition should be inactivated, the SMS-C can take into account a number of activities including the logging out of the user at the AAB, the user not using the AAB for a predetermined length of time (e.g. a timeout condition), and activity from the handset (e.g. if a user sends a message from the handset it may indicate that the user is no longer using the AAB).

One skilled in the art will appreciate that a suspend delivery condition may be activated when activities at the handset and AAB are broadly indicative that the user is using the AAB and not the handset. Similarly, the suspend delivery condition can be inactivated, or set to not active, when the user activities at the AAB and the handset indicate that the user is better served by not receiving messages exclusively at the AAB.

Based upon the foregoing, it should now be apparent to those of ordinary skill in the art that the present disclosure provides an advantageous solution. Although the system and method of the present disclosure have been described with particular reference to certain type of messages and nodes, it should be realized upon reference hereto that the innovative teachings contained herein are not necessarily limited thereto and may be implemented advantageously in various manners. It is believed that the operation and construction of the present disclosure will be apparent from the foregoing description.

Embodiments of the invention may be represented as a software product stored in a non-transitory machine-readable medium (also referred to as a computer-readable medium, a processor-readable medium, or a computer-usable medium having a computer-readable program code embodied therein). The machine-readable medium may be any suitable tangible medium including a magnetic, optical, or electrical storage medium including a diskette, compact disk read only memory (CD-ROM), digital versatile disc read only memory (DVD-ROM), memory device (volatile or non-volatile), or similar storage mechanism. The machine-readable medium may contain various sets of instructions, code sequences, configuration information, or other data, which, when executed, cause a processor to perform steps in a method according to an embodiment of the invention. Those of ordinary skill in the art will appreciate that other instructions and operations necessary to implement the described invention may also be stored on the machine-readable medium. Software running from the machine-readable medium may interface with circuitry to perform the described tasks.

The above-described embodiments of the present invention are intended to be examples only. Alterations, modifications and variations may be effected to the particular embodiments by those skilled in the art without departing from the scope of the invention, which is defined by the claims appended hereto.

## Claims

1. A method for distributing messages by a network messaging center, comprising:
receiving (200) a message (110) over a non-mobile device interface (224) from a client associated with a first Mobile Subscriber Integrated Services Digital Network Number MSISDN, addressed to a second MSISDN; and
transmitting (202) the received message (110), over a communication interface (220), towards a destination address of the second MSISDN;
**characterized in that** the method further comprises:
suspending delivery (121) of the received message (110) to a mobile device (92) associated with the first MSISDN in response to detecting user activity on the client.

2. The method of claim 1, wherein:
the mobile device (92) is a device to which the first MSISDN has been assigned; and
the client is an active address book (90) associated with the first MSISDN.

3. The method of any of claims 1 or 2, further comprising:
determining that a suspend delivery condition associated with the mobile device (92) is no longer active; and
forwarding (204) a copy of the received message to the mobile device (92).

4. The method of claim 3, further comprising modifying the copy of the received message (110) to indicate the first MSISDN as sender of the copy of the received message (110).

5. The method of any of claims 3 or 4, wherein the suspend delivery condition is determined to be no longer active in accordance with a lack of user activity on the client, a log off on the client, or a use of the mobile device (92).

6. The method of any of the preceding claims, further comprising buffering a copy of the received message (110).

7. The method of claim 6, wherein the step of buffering is performed in response to determining that a suspend delivery condition is active.

8. The method of claim 7, wherein the suspend delivery condition applies to all messages addressed to the first MSISDN; or
the suspend delivery condition applies to all messages sent to and received from the second MSISDN.

9. The method of any of the preceding claims, wherein the received message (110) is a Short Message Service SMS message (122).

10. A method for distributing messages by a network messaging center, comprising:
receiving (210) a message (110) from a device associated with a first Mobile Subscriber Integrated Services Digital Network Number MSISDN addressed to a second MSISDN;
forwarding (214) the received message (110), over a non-mobile device interface, to a client associated with the second MSISDN; and
withholding (214) transmission of the received message (110) to a mobile device to which the second MSISDN has been assigned, in response to determining (212) a suspend delivery condition associated with the second MSISDN is active;
**characterized in that** the suspend delivery condition is determined (212) to be active responsive to detecting user activity on the client.

11. The method of claim 10, wherein the client associated with the second MSISDN is an active address book (90).

12. The method of any of claims 10 or 11, further comprising the step of buffering the received message (110) for later delivery; and
wherein, optionally, the method further comprises the step of transmitting all buffered messages (110) to the mobile device to which the second MSISDN has been assigned.

13. The method of any of claims 10 to 12, further comprising the step of transmitting the received message (110) to the mobile device to which the second MSISDN has been assigned, in response to determining that the suspend delivery condition is not active; and
wherein, the step of transmitting includes retrieving the withheld message (110) from a storage.

14. A Short Message Service Center, SMS-C, (76, 94) comprising a memory, a processor (226) and a communication interface (220), the memory containing instructions executable by the processor (226) whereby the SMS-C (76, 94) is operative to:
receive (200), at the communication interface (220), a message (110) from a non-mobile device client associated with a first Mobile Subscriber Integrated Services Digital Network Number MSISDN, addressed to a second MSISDN; and
transmit (202), over the communication interface (220), the received message (110) with a destination address of the second MSISDN;
**characterized in that** the SMS-C (76, 94) is further operative to:
suspend (101) delivery of the received message (110) to a mobile device (92) associated with the first MSISDN in response to detecting, by the processor (226), user activity on the client.

15. The SMS-C (76, 94) of claim 14, wherein the SMS-C (76, 94) is further operative to:
determine that a suspend delivery condition associated with the mobile device (92) is no longer active; and
forward (204) a copy of the received message (110) to the mobile device (92); and
wherein, optionally, the suspend delivery condition is determined to be no longer active in accordance with a lack of user activity on the client, a log off on the client, or a use of the mobile device (92).

## Patentansprüche

1. Verfahren zum Verteilen von Nachrichten über eine Netzwerk-Nachrichtenzentrale, umfassend:
Empfangen (200) einer Nachricht (110) über eine Schnittstelle (224) einer nicht mobilen Vorrichtung von einem Client, welcher einer ersten Mobile-Subscriber-Integrated-Services-Digital-Network-Nummer, MSISDN, zugeordnet ist, wobei die Nachricht an eine zweite MSISDN adressiert ist; und
Senden (202) der empfangenen Nachricht (110) über eine Kommunikationsschnittstelle (220) an eine Zieladresse der zweiten MSISDN;
**dadurch gekennzeichnet, dass** das Verfahren ferner umfasst:
Aussetzen einer Übertragung (121) der empfangenen Nachricht (110) an eine der ersten MSISDN zugeordnete mobile Vorrichtung (92) auf ein Erfassen von Benutzeraktivität auf dem Client hin.

2. Verfahren nach Anspruch 1, wobei:
die mobile Vorrichtung (92) eine Vorrichtung ist, welcher die erste MSISDN zugewiesen wurde; und
der Client ein aktives Adressbuch (90) ist, welches der ersten MSISDN zugeordnet ist.

3. Verfahren nach einem der Ansprüche 1 oder 2, ferner umfassend:
Bestimmen, dass eine der mobilen Vorrichtung (92) zugeordnete Übertragungsaussetzungsbedingung nicht mehr aktiv ist; und
Weiterleiten (204) einer Kopie der empfangenen Nachricht an die mobile Vorrichtung (92).

4. Verfahren nach Anspruch 3, ferner umfassend ein Abändern der Kopie der empfangenen Nachricht (110), um die erste MSISDN als Absender der Kopie der empfangenen Nachricht (110) anzugeben.

5. Verfahren nach einem der Ansprüche 3 oder 4, wobei die Übertragungsaussetzungsbedingung nach Maßgabe eines Fehlens von Benutzeraktivität auf dem Client, eines Abmeldens auf dem Client oder eines Benutzens der mobilen Vorrichtung (92) als nicht länger aktiv bestimmt wird.

6. Verfahren nach einem der vorangehenden Ansprüche, ferner umfassend ein Zwischenspeichern einer Kopie der empfangenen Nachricht (110).

7. Verfahren nach Anspruch 6, wobei der Schritt des Zwischenspeicherns auf ein Bestimmen hin durchgeführt wird, dass eine Übertragungsaussetzungsbedingung aktiv ist.

8. Verfahren nach Anspruch 7, wobei die Übertragungsaussetzungsbedingung für alle an die erste MSISDN adressierte Nachrichten gilt; oder
die Übertragungsaussetzungsbedingung für alle Nachrichten gilt, welche an die zweite MSISDN gesandt und von der zweiten MSISDN empfangen wurden.

9. Verfahren nach einem der vorangehenden Ansprüche, wobei die empfangene Nachricht (110) eine Short-Message-Service-, SMS-, Nachricht (122) ist.

10. Verfahren zum Verteilen von Nachrichten über eine Netzwerk-Nachrichtenzentrale, umfassend:
Empfangen (210) einer Nachricht (110) von einer Vorrichtung, welche einer ersten Mobile-Subscriber-Integrated-Services-Digital-Network-Nummer, MSISDN, zugeordnet ist, wobei die Nachricht an eine zweite MSISDN adressiert ist;
Weiterleiten (214) der empfangenen Nachricht (110) über eine Schnittstelle einer nicht mobilen Vorrichtung an einen Client, welcher der zweiten MSISDN zugeordnet ist; und
Zurückhalten (214) eines Sendens der empfangenen Nachricht (110) an eine mobile Vorrichtung, welcher die zweite MSISDN zugewiesen wurde, auf ein Bestimmen (212) hin, dass eine der zweiten MSISDN zugeordnete Übertragungsaussetzungsbedingung aktiv ist;
**dadurch gekennzeichnet, dass** die Übertragungsaussetzungsbedingung auf ein Erfassen von Benutzeraktivität auf dem Client hin als aktiv bestimmt wird (212).

11. Verfahren nach Anspruch 10, wobei der der zweiten MSISDN zugeordnete Client ein aktives Adressbuch (90) ist.

12. Verfahren nach einem der Ansprüche 10 oder 11, ferner umfassend den Schritt des Zwischenspeicherns der empfangenen Nachricht (110) für eine spätere Übertragung; und
wobei das Verfahren wahlweise ferner den Schritt des Sendens aller zwischengespeicherter Nachrichten (110) an die mobile Vorrichtung umfasst, welcher die zweite MSISDN zugewiesen wurde.

13. Verfahren nach einem der Ansprüche 10 bis 12, ferner umfassend den Schritt des Sendens der empfangenen Nachricht (110) an die mobile Vorrichtung, welcher die zweite MSISDN zugewiesen wurde, auf ein Bestimmen hin, dass die Übertragungsaussetzungsbedingung nicht aktiv ist; und
wobei der Schritt des Sendens ein Abrufen der zurückgehaltenen Nachricht (110) von einem Speicher beinhaltet.

14. Short-Message-Service-Zentrale, SMS-C (76, 94), welche einen Speicher, einen Prozessor (226) und eine Kommunikationsschnittstelle (220) umfasst, wobei der Speicher Instruktionen enthält, welche mittels des Prozessors (226) ausführbar sind, wobei die SMS-C (76, 94) betreibbar ist zum:
Empfangen (200) einer Nachricht (110) von einem Client einer nicht mobilen Vorrichtung, welcher einer ersten Mobile-Subscriber-Integrated-Services-Digital-Network-Nummer, MSISDN, zugeordnet ist, an der Kommunikationsschnittelle (220), wobei die Nachricht an eine zweite MSISDN adressiert ist; und
Senden (202) der empfangenen Nachricht (110) mit einer Zieladresse der zweiten MSISDN über die Kommunikationsschnittstelle (220);
**dadurch gekennzeichnet, dass** die SMS-C (76, 94) ferner betreibbar ist zum:
Aussetzen (101) einer Übertragung der empfangenen Nachricht (110) an eine der ersten MSISDN zugeordnete mobile Vorrichtung (92) auf ein Erfassen von Benutzeraktivität auf dem Client durch den Prozessor (226) hin.

15. SMS-C (76, 94) nach Anspruch 14, wobei die SMS-C (76, 94) ferner betreibbar ist zum:
Bestimmen, dass eine der mobilen Vorrichtung (92) zugeordnete Übertragungsaussetzungsbedingung nicht länger aktiv ist; und
Weiterleiten (204) einer Kopie der empfangenen Nachricht (110) an die mobile Vorrichtung (92); und
wobei die Übertragungsaussetzungsbedingung wahlweise nach Maßgabe eines Fehlens von Benutzeraktivität auf dem Client, eines Ausloggens auf dem Client oder eines Benutzens der mobilen Vorrichtung (92) als nicht länger aktiv bestimmt wird.

## Revendications

1. Procédé de distribution de messages par un centre de messagerie de réseau, comprenant de :
recevoir (200) un message (110) via une interface de dispositif non mobile (224) depuis un client associé à un premier numéro de réseau numérique à services intégrés d'abonné mobile, MSISDN, adressé à un second MSISDN ; et
transmettre (202) le message reçu (110) via une interface de communication (220) vers une adresse de destination du second MSISDN ;
**caractérisé en ce que** le procédé comprend en outre de :
suspendre une remise (121) du message reçu (110) à un dispositif mobile (92) associé au premier MSISDN en réponse à la détection d'une activité d'utilisateur sur le client.

2. Procédé selon la revendication 1, dans lequel :
le dispositif mobile (92) est un dispositif auquel le premier MSISDN a été assigné ; et
le client est un carnet d'adresses actif (90) associé au premier MSISDN.

3. Procédé selon une quelconque des revendications 1 ou 2, comprenant en outre de :
déterminer qu'une condition de suspension de remise associée au dispositif mobile (92) n'est plus active ; et
acheminer (204) une copie du message reçu au dispositif mobile (92).

4. Procédé selon la revendication 3, comprenant en outre de modifier la copie du message reçu (110) pour indiquer le premier MSISDN comme l'expéditeur de la copie du message reçu (110).

5. Procédé selon une quelconque des revendications 3 ou 4, dans lequel la condition de remise suspendue est déterminée ne plus être active selon une absence d'activité d'utilisateur sur le client, une fermeture de session sur le client ou une utilisation du dispositif mobile (92).

6. Procédé selon une quelconque des revendications précédentes, comprenant en outre de mettre en mémoire tampon une copie du message reçu (110).

7. Procédé selon la revendication 6, dans lequel l'étape de mise en mémoire tampon est effectuée en réponse à la détermination qu'une condition de remise suspendue est active.

8. Procédé selon la revendication 7, dans lequel la condition de remise suspendue s'applique à tous les messages adressés au premier MSISDN ; ou
la condition de remise suspendue s'applique à tous les messages envoyés au et reçus du second MSISDN.

9. Procédé selon une quelconque des revendications précédentes, dans lequel le message reçu (110) est un message de service de messages courts, SMS (122).

10. Procédé de distribution de messages par un centre de messagerie de réseau, comprenant de :
recevoir (210) un message (110) depuis un dispositif associé à un premier numéro de réseau numérique à services intégrés d'abonné mobile, MSISDN, adressé à un second MSISDN ;
acheminer (214) le message reçu (110) via une interface de dispositif non mobile, vers un client associé au second MSISDN ; et
suspendre (214) une transmission du message reçu (110) à un dispositif mobile auquel le second MSISDN a été assigné, en réponse à la détermination (212) qu'une condition de remise suspendue associée au second MSISDN est active ;
**caractérisé en ce que** la condition de remise suspendue est déterminée (212) être active en réponse à une détection d'activité d'utilisateur sur le client.

11. Procédé selon la revendication 10, dans lequel le client associé au second MSISDN est un carnet d'adresses actif (90).

12. Procédé selon une quelconque des revendications 10 ou 11, comprenant en outre l'étape de mise en mémoire tampon du message reçu (110) en vue d'une remise ultérieure ; et
dans lequel, optionnellement, le procédé comprend en outre l'étape de transmission de tous les messages mis en mémoire tampon (110) au dispositif mobile auquel le second MSISDN a été assigné.

13. Procédé selon une quelconque des revendications 10 à 12, comprenant en outre l'étape de transmission du message reçu (110) au dispositif mobile auquel le second MSISDN a été assigné, en réponse à la détermination que la condition de remise suspendue n'est pas active ; et
dans lequel l'étape de transmission inclut d'extraire le message suspendu (110) d'un dispositif de mémorisation.

14. Centre de service de messages courts, SMS-C (76,94), comprenant une mémoire, un processeur (226) et une interface de communication (220), la mémoire contenant des instructions exécutables par le processeur (226), moyennant quoi le SMS-C (76,94) est opérationnel pour :
recevoir (200), au niveau de l'interface de communication (220), un message (110) d'un client de dispositif non mobile associé à un premier numéro de réseau numérique à services intégrés d'abonné mobile, MSISDN, adressé à un second MSISDN ; et
transmettre (202), via l'interface de communication (220), le message reçu (110) avec une adresse de destination du second MSISDN ;
**caractérisé en ce que** le SMS-C (76,94) est en outre opérationnel pour :
suspendre (101) une remise du message reçu (110) à un dispositif mobile (92) associé au premier MSISDN en réponse à la détection, par le processeur (226), d'une activité d'utilisateur sur le client.

15. SMS-C (76,94) selon la revendication 14, dans lequel le SMS-C (76,94) est en outre opérationnel pour :
déterminer qu'une condition de remise suspendue associée au dispositif mobile (92) n'est plus active ; et
acheminer (204) une copie du message reçu (110) au dispositif mobile (92) ; et
dans lequel, optionnellement, la condition de remise suspendue est déterminée ne plus être active selon une absence d'activité d'utilisateur sur le client, une fermeture de session sur le client ou une utilisation du dispositif mobile (92).
